# EUROPEAN PATENT APPLICATION

(11) **EP 4 769 800 A1**
(43) Date of publication of application: **01.07.2026**
(21) Application number: 25863826.1
(22) Date of filing: 15.07.2025
(51) Int. Cl.: H01M 50/503, H01M 50/507, H01M 50/514, H01M 50/519

(54) **BUSBAR AND BATTERY MODULE COMPRISING SAME**

(30) Priority: 06.09.2024 KR 20240121413; 11.07.2025 KR 20250093676
(71) Applicant: LG Energy Solution, Ltd., Seoul 07335 (KR)
(72) Inventor: SEON, Sang Ok, Daejeon 34122 (KR); SHIN, Jae Wook, Daejeon 34122 (KR); HWANG, Jae Cheol, Daejeon 34122 (KR); KIM, Jee Won, Daejeon 34122 (KR); KIM, Seon Woo, Daejeon 34122 (KR)
(74) Representative: Plasseraud IP
(86) International application number: PCT/KR2025/010370
(87) International publication number: WO 2026/054297

(57) **Abstract**

The present disclosure relates to a busbar and a battery module including the same, and the busbar according to an aspect of the present disclosure is a busbar for battery cells for electrical conduction between electrode leads of the battery cells, and includes a lead coupling portion having a coupling space where the electrode leads enter in a coupling direction; and a guide portion extending in the coupling direction from a side of the lead coupling portion to guide the electrode leads to enter the coupling space.

## Description

### TECHNICAL FIELD

### CROSS-REFERENCE TO RELATED APPLICATIONS

This application is based on and claims priority from Korean Patent Application No. 10-2024-0121413 filed on September 6, 2024 and Korean Patent Application No. 10-2025-0093676 filed on July 11, 2025 with the Korean Intellectual Property Office, the disclosures of which is incorporated herein are its entirety by reference.

### TECHNICAL FIELD

The present disclosure relates to a busbar and a battery module including the same, and more particularly, to a busbar for a battery cell and a battery module including the same.

### BACKGROUND

In general, the types of secondary batteries include nickel cadmium batteries, nickel hydrogen batteries, lithium-ion batteries and lithium-ion polymer batteries. Secondary batteries are used in not only small products such as digital cameras, P-DVDs, MP3Ps, mobile phones, PDAs, portable game devices, power tools and E-bikes, but also large products requiring high output such as electric vehicles or hybrid electric vehicles and energy storage systems that store surplus power or new renewable energy and energy storage systems for backup.

Secondary batteries may be provided in the form of battery cells. Battery cells are classified into cylindrical, prismatic or pouch types according to the shape of an outer packaging accommodating the battery cells, and according to the shape of an electrode assembly, they are largely classified into a jellyroll type in which a positive electrode and a negative electrode of a long sheet shape, each electrode coated with an active material are wound with a separator interposed between them, a stack type in which a plurality of positive electrodes and a plurality of negative electrodes of a predetermined size are stacked in a sequential order with a separator interposed them, and a stack/folding type in which stack type unit cells are wound with a long separation film.

Meanwhile, a plurality of battery cells may be electrically connected to each other. This may be to increase the electrical capacity that can be charged and discharged or the voltage. To this end, electrode leads of the battery cells may be connected to each other through a busbar. The busbar is a conductor for electrical conduction between the plurality of battery cells in a predetermined manner, and is generally provided in the form of a film, a sheet, a wire, a busbar or a metal strip (block).

### DISCLOSURE

### TECHNICAL PROBLEM

The present disclosure is designed to solve the above-described problems, and therefore the present disclosure is directed to providing a busbar that may be stably coupled to an electrode lead of a battery cell and a battery module including the same.

The problems of the present disclosure are not limited to the aforementioned problems, and these and other problems will be clearly understood by persons having ordinary skill in the technical field pertaining to the present disclosure from the following description.

### TECHNICAL SOLUTION

According to an aspect of the present disclosure, provided is a busbar for battery cells for electrical conduction between electrode leads of the battery cells, the busbar including a lead coupling portion having a coupling space where the electrode leads enter in a coupling direction; and a guide portion extending in the coupling direction from a side of the lead coupling portion to guide the electrode leads to enter the coupling space.

In this instance, the guide portion may include first and second guide portions with the coupling space positioned between the first and second guide portions.

In this instance, the first and second guide portions may have a symmetrical shape with respect to the coupling space.

In this instance, the coupling direction may be perpendicular to a length direction of the electrode leads, and the coupling space may be open in the coupling direction.

In this instance, the guide portion may extend at an angle with respect to the coupling direction.

In this instance, at least one area of an outer surface of the guide portion may be flat for welding of a pad portion of a circuit board.

In this instance, the lead coupling portion may include first and second extension portions extending parallel to each other to provide the coupling space therebetween; and a connection portion connecting the first and second extension portions.

In this instance, the connection portion may be deformed to apply an elastic force in a direction in which the first and second extension portions get closer to each other.

In this instance, the lead coupling portion may include a first extension portion-side protruding portion that protrudes from the first extension portion toward the second extension portion.

In this instance, the lead coupling portion may include a second extension portion-side protruding portion that protrudes from the second extension portion toward the first extension portion, and the first extension portion-side protruding portion and the second extension portion-side protruding portion may be arranged in a staggered manner in a direction in which the first and second extension portions face each other.

According to another aspect of the present disclosure, provided is a battery module including a plurality of battery cells, each battery cell having an electrode lead for electrical conduction between the battery cell and an external device; and a busbar for electrical conduction between at least one of the plurality of battery cells and the other battery cell, wherein the busbar includes a lead coupling portion having a coupling space where the electrode leads enter in a coupling direction; and a guide portion extending in the coupling direction from a side of the lead coupling portion to guide the electrode leads to enter the coupling space.

In this instance, the battery module may further include a support frame extending in an arrangement direction of the plurality of battery cells and configured to support the busbar.

In this instance, the support frame may include a frame portion extending in the arrangement direction; and a support portion protruding or recessed from the frame portion to support the busbar.

In this instance, the support portion may include at least one of a base support portion having a rib shape to support a side of the busbar; and a fitting support portion having a protrusion shape to allow a hole of the busbar to be inserted.

In this instance, the plurality of battery cells may be located at a side of the support frame, and the busbar may be positioned at an opposite side of the support frame.

In this instance, the support frame may have a lead space through which the electrode leads pass.

In this instance, the coupling direction may be perpendicular to a length direction of the electrode leads, and each of the coupling space and the lead space may be open in the coupling direction.

In this instance, the busbar may include a plurality of busbars, the plurality of busbars arranged along a length direction of the support frame, and the lead space may include a plurality of lead spaces, each of the plurality of lead spaces located at a side of each of the plurality of busbars.

In this instance, the battery module may further include a circuit board coupled to the guide portion of the busbar to measure a resistance or a current of the battery cell.

In this instance, the busbar may include a plurality of busbars, the plurality of busbars arranged in a line, and the circuit board may include an extension portion extending in a direction in which the plurality of busbars is arranged; and a plurality of pad portions arranged along a length direction of the extension portion, each pad portion coupled to each of the plurality of busbars.

In this instance, the pad portion may be coupled to an outer surface of the guide portion by welding.

### ADVANTAGEOUS EFFECTS

According to an aspect of the present disclosure, the guide portion extending outward from the lead coupling portion that provides the coupling space may easily guide the electrode lead of the battery cell into the coupling space when coupling. Accordingly, the busbar and the electrode lead may be stably coupled.

According to another aspect of the present disclosure, as the pad portion of the circuit board may be coupled to the guide portion extending outward from the lead coupling portion to which the electrode lead is coupled, the circuit board may easily measure information associated with the electrical properties of the battery cell.

The effects of the present disclosure are not limited to the aforementioned effects, and these and other effects will be clearly understood by persons having ordinary skill in the technical field pertaining to the present disclosure from the specification and the accompanying drawings.

### BRIEF DESCRIPTION OF THE DRAWINGS

FIG. 1 is a perspective view of a battery module according to an embodiment of the present disclosure when viewed from above. In this instance, a housing and a circuit board are indicated by the dotted line, and components seen through are indicated by the solid line.
FIG. 2 is a partial enlarged view of FIG. 1.
FIG. 3 is a diagram illustrating a process of coupling an electrode lead of a battery cell to a busbar.
FIG. 4 is a horizontal cross-sectional view showing an electrode lead coupled to a busbar.

### BEST MODE

The exemplary embodiments of the present disclosure will be described in sufficient detail to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

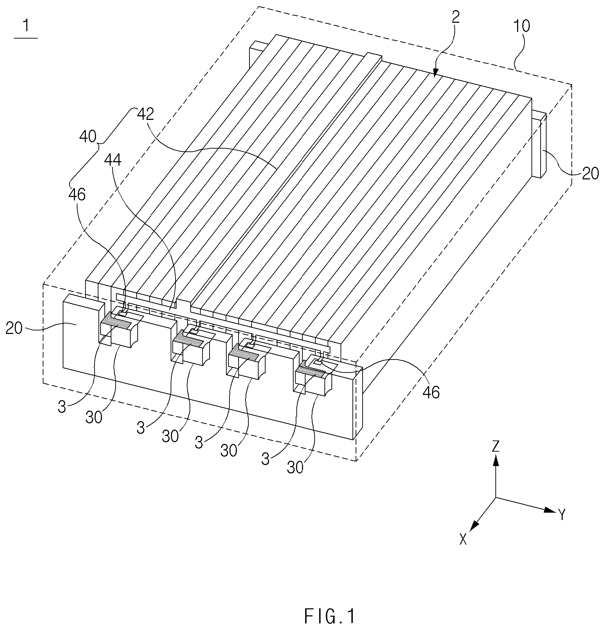

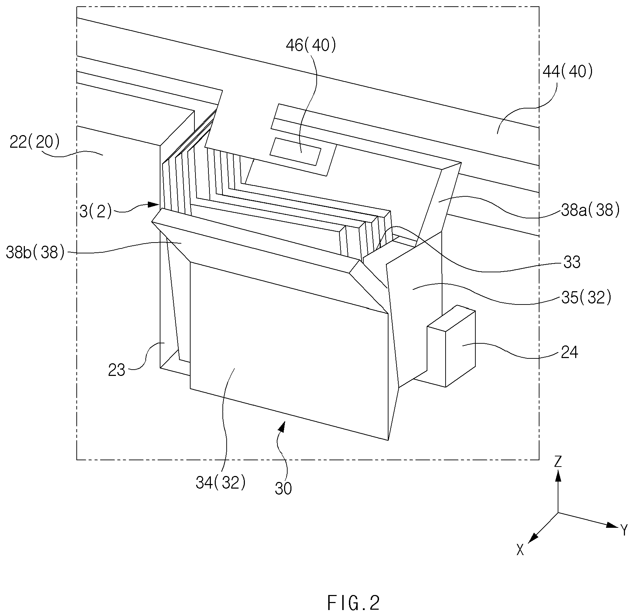

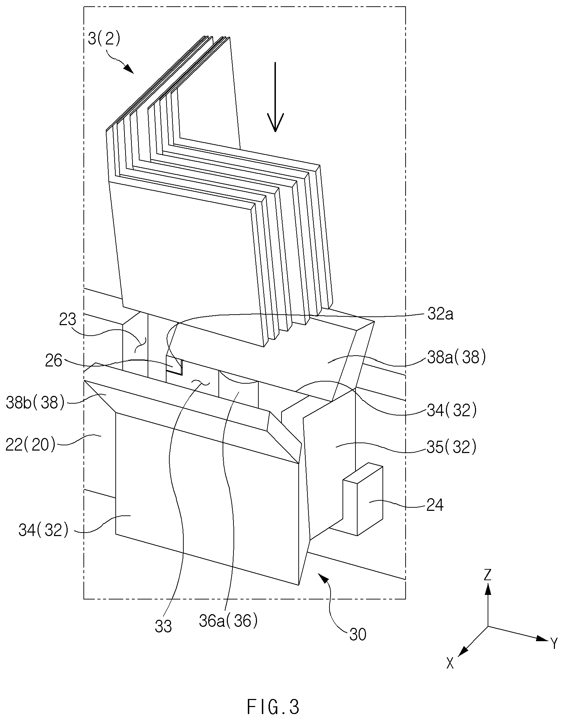

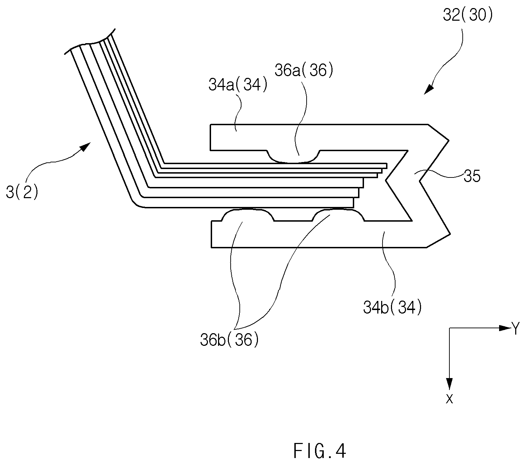

FIG. 1 is a perspective view of a battery module according to an embodiment of the present disclosure when viewed from above. In this instance, a housing and a circuit board are indicated by the dotted line, and components seen through are indicated by the solid line. FIG. 2 is a partial enlarged view of FIG. 1. FIG. 3 is a diagram illustrating a process of coupling an electrode lead of a battery cell to a busbar. FIG. 4 is a horizontal cross-sectional view showing the electrode lead coupled to the busbar.

FIGS. 1 to 4 show the battery module according to an embodiment of the present disclosure. Referring to FIG. 1, the battery module 1 according to an embodiment of the present disclosure may be a module for charging and discharging electrical energy.

The battery module 1 according to an embodiment of the present disclosure may include the housing 10. The housing 10 may be configured to accommodate and protect other components of the battery module 1. To this end, the housing 10 may be made of a metal or plastic having a predetermined rigidity.

In this embodiment, the housing 10 may be a box-shaped structure. The housing 10 may have a predetermined space inside. However, the housing 10 is not limited to a particular structure or shape and may have any structure or shape for accommodating and protecting other components inside.

Meanwhile, other components for achieving the function of the battery module 1 may be installed in the housing 10. For example, the housing 10 may be equipped with a terminal (not shown) for electrical conduction between the battery cell 2 as described below and an external device, a vent plug (not shown) for external venting of the housing 10, but is not limited thereto.

Referring to FIGS. 1 and 2, the battery module 1 according to an embodiment of the present disclosure may include the battery cell 2. The battery cell 2 may be configured to charge and discharge electrical energy. The battery cell 2 may be a secondary battery.

In this instance, the battery cell 2 may come in different types or structures. For example, the battery cell 2 may include a pouch-type secondary battery, a prismatic secondary battery and/or a cylindrical secondary battery, but is not limited thereto. The following description will be made on the assumption that the battery cell 2 of the battery module 1 is a pouch-type secondary battery.

In this embodiment, the battery cell 2 may extend forward and rearward (X-axis direction). In this instance, the battery cell 2 may include a plurality of battery cells. The plurality of battery cells 2 may be arranged parallel to each other in the left-right direction (Y-axis direction). The arrangement direction of the battery cells 2 is not limited to a particular direction. Hereinafter, an assembly of battery cells 2 is referred to as a cell stack.

In this embodiment, the battery cell 2 may have the electrode lead 3. The electrode lead 3 may be configured to conduct current from the battery cell 2 to the external device. The electrode lead 3 may extend outward from the battery cell 2. In this instance, the electrode lead 3 may be classified into a negative electrode lead and a positive electrode lead according to polarity.

In this embodiment, the electrode lead 3 of the battery cell 2 may include one positive electrode lead and one negative electrode lead. In other words, the electrode lead 3 may include a pair of electrode leads. Additionally, each of the pair of electrode leads 3 may be present at each of two sides of the battery cell 2 in the length direction (X-axis direction). However, the number of electrode leads 3 or the location or direction in which the electrode lead 3 extends from the battery cell 2 is not limited to a particular one.

Referring to FIGS. 1 to 3, the battery module 1 according to an embodiment of the present disclosure may include a support frame 20. The support frame 20 may be configured to support the cell stack and/or the busbar 30 as described below. To this end, the support frame 20 may be made of a material having a predetermined rigidity. For example, the support frame 20 may be formed by plastic injection molding.

In this embodiment, the support frame 20 may include a pair of support frames and each of the pair of support frames 20 may be located at each of the front side (positive direction of the X axis) and the rear side (negative direction of the X axis) of the cell stack. However, the relative positions of the support frame 20 and the cell stack may be appropriately changed, taking into account the structure of the battery cell 2 or the arrangement direction of the battery cells 2.

Hereinafter, the description will be made based on the support frame 20 located at the front side (positive direction of the X-axis) of the cell stack. In this embodiment, the support frame 20 may include a frame portion 22. In this instance, the frame portion 22 may have a plate shape having a predetermined thickness.

In this instance, the frame portion 22 may extend in the left-right direction (Y-axis direction). The thickness direction of the frame portion 22 may be parallel to the front-rear direction (X-axis direction). The length and thickness of the frame portion 22 may be appropriately set as needed.

Referring to FIGS. 1 to 3, in this embodiment, the frame portion 22 may have a lead space 23. The lead space 23 may be a space through which the electrode lead 3 of the battery cell 2 passes. To this end, the lead space 23 may run through the frame portion 22 in the front-rear direction (X-axis direction). This configuration may be because the cell stack and the busbar 30 as described below are located at opposite sides with the frame portion 22 positioned therebetween.

In addition, the lead space 23 may be open in a direction (hereinafter referred to as a coupling direction) (Z-axis direction) in which the electrode lead 3 is coupled to the busbar 30. Based on the drawings, the lead space 23 may have an open top (positive direction of the Z axis). Accordingly, the electrode lead 3 moving downward (negative direction of the Z axis) so as to be coupled to the busbar 30 may enter the lead space 23. Accordingly, the direction of the arrow shown in FIG. 3 may be the coupling direction (Z-axis direction) in which the electrode lead 3 makes a movement so as to be coupled to the busbar 30.

Accordingly, the coupling direction (Z-axis direction) in which the electrode lead 3 is coupled to the busbar 3 may be the top-bottom direction based on the drawings. In addition, the coupling direction (Z-axis direction) in which the electrode lead 3 is coupled to the busbar 3 may be perpendicular to the length direction (Y-axis direction) of the electrode lead 3.

In this embodiment, the lead space 23 may include a plurality of lead spaces. The plurality of lead spaces 23 may be arranged along the extension direction (Y-axis direction) of the frame portion 22. In this instance, the number of lead spaces 23 may correspond to the number of busbars 30.

In this instance, the number of busbars 30 may be the number of busbars 30 supported on the support frame 20 located at the front side of the cell stack (positive direction of the X axis) among the plurality of busbars 30.

Referring to FIGS. 2 and 3, in this embodiment, the support frame 20 may include a base support portion 24. The base support portion 24 may have a rib structure that protrudes forward (in the positive direction of the X axis) from the frame portion 22. This may be for supporting the busbar 30 located at the front side of the frame portion 22.

In this instance, the base support portion 24 may be configured to support the bottom (negative direction of the Z axis) of the busbar 30. The structure of the base support portion 24 may be appropriately changed, taking into account the shape or position of the busbar 30.

In this embodiment, the support frame 20 may include a fitting support portion 26. The fitting support portion 26 may have a protrusion shape that protrudes forward (in the positive direction of the X-axis) from the frame portion 22. This may be for supporting the busbar 30 located at the front side of the frame portion 22. The fitting support portion 26 may be coupled into a fitting hole 32a of the busbar 30.

In this instance, the fitting support portion 26 may be made of a plastic that may be melted by a predetermined amount of heat energy. In the manufacturing process of the battery module 1, the predetermined amount of heat energy may be applied to the fitting support portion 26 inserted into the fitting hole 32a.

Accordingly, the fitting support portion 26 may be melted and joined to the inner wall of the fitting hole 32a. Additionally, the fitting support portion 26 may harden after it has been melted. Through this coupling structure, the coupling strength of the support frame 20 and the busbar 30 may be enhanced. However, the coupling structure of the fitting support portion 26 and the busbar 30 is not limited to a particular one.

Meanwhile, in this embodiment, the support frame 20 located at the rear side (negative direction of the X axis) of the battery cell 2 may be identical or symmetrical to the support frame 20 located at the front side (positive direction of the X-axis). If necessary, the support frames 20 located at the front side and the rear side may have different structures.

Referring back to FIGS. 1 to 4, the battery module 1 according to an embodiment of the present disclosure may include the busbar 30. The busbar 30 may be a busbar for battery cells for electrical conduction between at least two battery cells 2. To this end, the busbar 30 may be made of a conductive material such as a metal.

In this embodiment, the busbar 30 may be located at the side opposite to the battery cell 2 with respect to the frame portion 22. Based on the drawings, the busbar 30 may be located at the front side (positive direction of the X-axis) of the frame portion 22. In this instance, the busbar 30 may be located at one side of the lead space 23. The busbar 30 may be positioned parallel to the lead space 23 in the left-right direction (Y-axis direction).

In this embodiment, the busbar 30 may include a lead coupling portion 32. The lead coupling portion 32 may be configured to provide a coupling space 33 where the electrode leads 3 of the battery cell 2 may enter in the coupling direction (Z-axis direction). Here, the coupling direction (Z-axis direction) may be the top-bottom direction on the basis of the drawings as described above. In addition, the coupling direction (Z-axis direction) in which the electrode lead 3 is coupled to the busbar 3 may be perpendicular to the length direction (Y-axis direction) of the electrode lead 3.

In this embodiment, the lead coupling portion 32 may include an extension portion 34 for defining the coupling space 33. The extension portion 34 may have a plate shape extending in the left-right direction (Y-axis direction).

In this instance, the extension portion 34 may include a first extension portion 34a and a second extension portion 34b parallel to each other. The first extension portion 34a and the second extension portion 34b may be spaced apart by a predetermined distance in the front-rear direction (X-axis direction).

Accordingly, the coupling space 33 may be provided between the first extension portion 34a and the second extension portion 34b. The electrode leads 3 may be inserted between the first extension portion 34a and the second extension portion 34b.

In this embodiment, the coupling space 33 may be open in the coupling direction (Z-axis direction) in which the electrode leads 3 are coupled in order to allow the electrode leads 3 to enter. Accordingly, on the basis of the drawings, the coupling space 33 may have an open top (positive direction of the Z axis) and an open bottom (negative direction of the Z axis).

Additionally, in this embodiment, the coupling space 33 may be open to the adjacent lead space 23 (negative direction of the Y axis). This may be to allow the electrode leads 3 passing through the lead space 23 to enter the coupling space 33.

Although not particularly shown, to reinforce the coupling of the extension portion 34 and the electrode lead 3, an additional penetration welding process may be performed on the outer surface of the extension portion 34. This may prevent the electrode lead 3 from slipping out of the coupling space 33 due to vibration or external impact.

Meanwhile, in this embodiment, the lead coupling portion 32 may include a connection portion 35. The connection portion 35 may be configured to connect the first extension portion 34a to the second extension portion 34b. The connection portion 35 may be located at one side of the extension portion 34.

In this instance, the connection portion 35 may be located at the side opposite to the lead space 23 with the extension portion 34 positioned between them. This may be to prevent the connection portion 35 from obstructing between the lead space 23 and the coupling space 33.

In this embodiment, the connection portion 35 may be configured to apply an elastic force to the extension portion 34. The elastic force may be applied in a direction in which the first extension portion 34a and the second extension portion 34b get closer to each other. This force may increase the coupling strength between the electrode lead 3 positioned in the coupling space 33 and the lead coupling portion 32.

To this end, the connection portion 35 may have such a shape that a central portion is bent toward the coupling space 33. In other words, the lead coupling portion 32 may have, as a whole, an elastic clip structure to allow the electrode lead 3 to be inserted. However, the lead coupling portion 32 is not limited to a particular structure and may have any structure for providing the coupling space 33 where the electrode lead 3 may enter.

Meanwhile, referring to FIG. 4, the lead coupling portion 32 may have a protruding portion 36. The protruding portion 36 may be configured to enhance the coupling strength between the busbar 30 and the electrode lead 3 that has entered the coupling space 33.

In this embodiment, the protruding portion 36 may include a first protruding portion 36a protruding from the first extension portion 34a toward the second extension portion 34b and a second protruding portion 36b protruding from the second extension portion 34b toward the first extension portion 34a.

In this instance, at least one of the first protruding portion 36a and the second protruding portion 36b may include a plurality of protruding portions. The plurality of protruding portions 36 may be arranged along the extension direction (Y-axis direction) of the extension portion 34.

In this instance, the first protruding portion 36a and the second protruding portion 36b may be arranged in a staggered manner in the front-rear direction (X-axis direction) in which the first extension portion 34a and the second extension portion 34b are spaced apart. Through this, it is possible to prevent an excessive force from acting on a part of the electrode lead 3 inserted into the coupling space 33.

Referring back to FIGS. 2 and 3, the busbar 30 according to an embodiment of the present disclosure may include a guide portion 38. The guide portion 38 may be configured to guide the movement of the electrode lead 3 when the electrode lead 3 is coupled to the busbar 30.

More specifically, in the busbar 30 according to an embodiment of the present disclosure, the guide portion 38 may extend in the coupling direction (Z-axis direction) from one side of the lead coupling portion 32 to guide the electrode lead 3 that enters the coupling space 33. Here, the coupling direction (Z-axis direction) may be the top-bottom direction on the basis of the drawings as described above.

Accordingly, the guide portion 38 may extend upward (positive direction of the Z axis) from the top of the lead coupling portion 32 as shown in FIGS. 2 and 3. Accordingly, the guide portion 38 may serve to guide the electrode lead 3 to stably enter the coupling space 33 in the coupling direction (Z-axis direction).

In this embodiment, the guide portion 38 may include a first guide portion 38a and a second guide portion 38b. The first guide portion 38a may extend upward (positive direction of the Z axis) away from the first extension portion 34a, and the second guide portion 38b may extend upward (positive direction of the Z axis) away from the second extension portion 34b. The first guide portion 38a may pass above (positive direction of the Z axis) the frame portion 22.

In this instance, the first and second guide portions 38a, 38b may be inclined with respect to the coupling direction (Z-axis direction). The first guide portion 38a and the second guide portion 38b may extend away from each other as they go upward (positive direction of the Z axis).

In other words, a space between the first guide portion 38a and the second guide portion 38b may have a tapered shape with a cross section increasing upwards (positive direction of the Z axis), and the bottom (negative direction of the Z axis) may be connected to the coupling space 33. Accordingly, as shown in FIG. 3, the electrode lead 3 may stably enter the coupling space 33 with the guidance of the first and second guide portions 38a, 38b. That is, the electrode lead 3 may stably enter the coupling space 33 in the coupling direction (Z-axis direction) through the first and second guide portions 38a, 38b.

In addition, in this embodiment, the electrode lead 3 may be coupled to the lead coupling portion 32 as it moves into the coupling space 33 in the coupling direction (Z-axis direction) with the guidance of the guide portion 38, making it easy to couple the electrode lead 3 to the busbar 30.

Meanwhile, in this embodiment, the outer surface of the guide portion 38 may be flat. This may be to facilitate easy coupling of a pad portion 46 of the circuit board 40 as described below.

Referring back to FIG. 1, the busbar 30 of the battery module 1 according to an embodiment of the present disclosure may include a plurality of busbars. Some of the plurality of busbars 30 may be supported on the support frame 20 located at the front side (positive direction of the X axis), and the others may be supported on the support frame 20 located at the rear side (negative direction of the X axis). In this instance, the plurality of busbars 30 may be arranged along the length direction (Y-axis direction) of the support frame 20.

Meanwhile, referring back to FIG. 1, the battery module 1 according to an embodiment of the present disclosure may include the circuit board 40. The circuit board 40 may be electrically connected to the battery cells 2 to perform a predetermined function.

As an example, the circuit board 40 may perform the function of collecting information associated with current, resistance, charge level and/or temperature of the battery cell 2 and transmitting the information to a control unit (not shown) of the battery module 1. In this instance, the control unit may be a battery management system (BMS), but is not limited thereto.

In this embodiment, the circuit board 40 may include a board body portion 42. The board body portion 42 may extend in the extension direction (X-axis direction) of the battery cell 2 on the upper side (positive direction of the Z axis) of the cell stack.

The board body portion 42 may be configured to connect the circuit board 40 to other component such as the control unit. The extension direction of the board body portion 42 may be changed as needed, taking into account the arrangement direction of the battery cells 2 or the position of the electrode leads 3.

In this embodiment, the circuit board 40 may include a board extension portion 44. The board extension portion 44 may include a pair of board extension portions and each of the pair of board extension portions 44 may be present at each of two sides (X-axis direction) of the board body portion 42 in the length direction. In other words, each of the pair of board extension portions 44 may be located at each of the front side (positive direction of the X-axis) and the rear side (negative direction of the X-axis) of the board body portion 42.

In this instance, the board extension portion 44 may extend in the length direction (Y-axis direction) of the support frame 20. This may be to provide a base for the pad portion 46 as described below.

In this embodiment, the circuit board 40 may include a plurality of pad portions 46. The pad portion 46 may be electrically connected to the busbar 30 to collect electrical information of the battery cell 2. Here, the electrical information may include the current, resistance or charge level.

In this instance, some of the plurality of pad portions 46 may be present in the substrate extension portion 44 located at the front side (positive direction of the X axis), and the others may be present in the substrate extension portion 44 located at the rear side (negative direction of the X axis). The plurality of pad portions 46 may be arranged along the length direction (Y-axis direction) of the board extension portion 44.

In this embodiment, the number of pad portions 46 and the number of busbars 30 may be equal. Each of the plurality of pad portions 46 may be electrically connected to each of the plurality of busbars 30. The pad portion 46 may be electrically connected to the busbar 30 in a predetermined manner.

Referring to FIG. 2, in this embodiment, the pad portion 46 may be coupled to the guide portion 38 of the busbar 30. The guide portion 38 to which the pad portion 46 is coupled may be the first guide portion 38a. In this case, the pad portion 46 may be coupled to the outer surface of the guide portion 38 by welding. However, the method for coupling the pad portion 46 to the guide portion 38 is not limited to a particular one.

As described above, in the battery module 1 according to an embodiment of the present disclosure, as the busbar 30 includes the guide portion 38, it may be possible to guide the coupling of the electrode lead 3 and the lead coupling portion 32, and provide the base to which the pad portion 46 of the circuit board 40 is coupled. Accordingly, in this embodiment, the busbar 30 and the electrode lead 3 may be precisely coupled to each other, and the circuit board 40 may reliably receive the information associated with the battery cell 2 from the busbar 30.

Although the present disclosure has been hereinabove described with regard to a limited number of embodiments and drawings, the present disclosure is not limited thereto, and the present disclosure may be embodied in different forms by persons having ordinary skill in the technical field pertaining to the present disclosure within the technical scope of the present disclosure and the appended claims and their equivalents.

### [List of Reference Numerals]

1: Battery module
2: Battery cell
10: Support frame
30: Busbar
40: Circuit board

## Claims

1. A busbar for battery cells for electrical conduction between electrode leads of the battery cells, the busbar comprising:
a lead coupling portion having a coupling space where the electrode leads enter in a coupling direction; and
a guide portion extending in the coupling direction from a side of the lead coupling portion to guide the electrode leads to enter the coupling space.

2. The busbar according to claim 1,
wherein the guide portion includes first and second guide portions with the coupling space positioned between the first and second guide portions.

3. The busbar according to claim 2,
wherein the first and second guide portions have a symmetrical shape with respect to the coupling space.

4. The busbar according to claim 1,
wherein the coupling direction is perpendicular to a length direction of the electrode leads, and
wherein the coupling space is open in the coupling direction.

5. The busbar according to claim 4,
wherein the guide portion extends at an angle with respect to the coupling direction.

6. The busbar according to claim 1,
wherein at least one area of an outer surface of the guide portion is flat for welding of a pad portion of a circuit board.

7. The busbar according to claim 1,
wherein the lead coupling portion includes:
first and second extension portions extending parallel to each other to provide the coupling space therebetween; and
a connection portion connecting the first and second extension portions.

8. The busbar according to claim 7,
wherein the connection portion is deformed to apply an elastic force in a direction in which the first and second extension portions get closer to each other.

9. The busbar according to claim 7,
wherein the lead coupling portion includes:
a first extension portion-side protruding portion that protrudes from the first extension portion toward the second extension portion.

10. The busbar according to claim 9,
wherein the lead coupling portion includes:
a second extension portion-side protruding portion that protrudes from the second extension portion toward the first extension portion, and
wherein the first extension portion-side protruding portion and the second extension portion-side protruding portion are arranged in a staggered manner in a direction in which the first and second extension portions face each other.

11. A battery module comprising:
a plurality of battery cells, each battery cell having an electrode lead for electrical conduction between the battery cell and an external device; and
a busbar for electrical conduction between at least one of the plurality of battery cells and the other battery cell,
wherein the busbar includes:
a lead coupling portion having a coupling space where the electrode leads enter in a coupling direction; and
a guide portion extending in the coupling direction from a side of the lead coupling portion to guide the electrode leads to enter the coupling space.

12. The battery module according to claim 11, further comprising:
a support frame extending in an arrangement direction of the plurality of battery cells and configured to support the busbar.

13. The battery module according to claim 12,
wherein the support frame includes:
a frame portion extending in the arrangement direction; and
a support portion protruding or recessed from the frame portion to support the busbar.

14. The battery module according to claim 13,
wherein the support portion includes at least one of:
a base support portion having a rib shape to support a side of the busbar; and
a fitting support portion having a protrusion shape to allow a hole of the busbar to be inserted.

15. The battery module according to claim 12,
wherein the plurality of battery cells is located at a side of the support frame, and
wherein the busbar is positioned at an opposite side of the support frame.

16. The battery module according to claim 15,
wherein the support frame has a lead space through which the electrode leads pass.

17. The battery module according to claim 16,
wherein the coupling direction is perpendicular to a length direction of the electrode leads, and
wherein each of the coupling space and the lead space is open in the coupling direction.

18. The battery module according to claim 16,
wherein the busbar includes a plurality of busbars, the plurality of busbars arranged along a length direction of the support frame, and
wherein the lead space includes a plurality of lead spaces, each of the plurality of lead spaces located at a side of each of the plurality of busbars.

19. The battery module according to claim 11, further comprising:
a circuit board coupled to the guide portion of the busbar to measure a resistance or a current of the battery cell.

20. The battery module according to claim 19,
wherein the busbar includes a plurality of busbars, the plurality of busbars arranged in a line, and
wherein the circuit board includes:
an extension portion extending in a direction in which the plurality of busbars is arranged; and
a plurality of pad portions arranged along a length direction of the extension portion, each pad portion coupled to each of the plurality of busbars.

21. The battery module according to claim 20,
wherein the pad portion is coupled to an outer surface of the guide portion by welding.
